# EUROPEAN PATENT APPLICATION

(11) **EP 3 674 660 A2**
(43) Date of publication of application: **01.07.2020**
(21) Application number: 19213038.3
(22) Date of filing: 03.12.2019
(51) Int. Cl.: G01C 15/00, G06T 19/00

(54) **A COMPUTER-IMPLEMENTED METHOD, A COMPUTER PROGRAM PRODUCT, AND AN APPARATUS FOR FACILITATING PLACEMENT OF A SURVEYING TOOL**

(30) Priority: 04.12.2018 SE 1851506
(71) Applicant: Bjorkstrom Robotics AB, 22370 Lund (SE)
(72) Inventor: BJÖRKSTRÖM, Kristofer, 22370 LUND (SE)
(74) Representative: Zacco Sweden AB

(57) **Abstract**

A computer-implemented method of a mobile device for facilitating placement of a surveying tool, such as a rover rod is disclosed. The method comprises capturing (110), by a camera (14), at least one image (28) of surroundings; generating (120), by the mobile device (20), a representation (300) of the surroundings, based on the at least one captured image (28); creating (130), by the mobile device (20), a model (310) of the surveying tool (10) based on an estimation of a diameter and/or a length of the surveying tool (10) from a lockup table with known diameters and/or lengths of surveying tools, thereby producing a virtual surveying tool (312); receiving (140), by the mobile device (20), a model (320) of survey-related data, the survey-related data identifying a placement area/point (52) for the surveying tool (10); calculating (150), by the mobile device (20), respective mappings (32, 33) of the model (310) of the surveying tool (10), based on the position of the placement area/point (52), and of the model (320) of survey-related data to the representation (300) of the surroundings, based on sensor data from an electronic receiver (12) detachably attached to the mobile device (20), and based on sensor data from an inertial measurement unit, IMU, (16), the sensor data being associated with the at least one image (28) of the surroundings, thereby aligning the models (310, 320) with the representation (300); augmenting (160), by the mobile device (20), the representation (300) of the surroundings by superimposing the mappings (32, 33) onto the representation (300) of the surroundings, thereby producing at least one augmented representation (330); and displaying (170), by a display device (18), the at least one augmented representation (330). Corresponding apparatus and computer program product are also disclosed.

## Description

### TECHNICAL FIELD

The present disclosure relates generally to the field of surveying. More particularly, it relates to assisting surveying with a surveying tool.

### BACKGROUND

There are problems with surveying, such as difficulties while marking out positions or lines, since it may be time consuming to mark out positions or lines and/or it may be hard to calculate the positions, lines or areas to mark out.

Some surveying systems are known from prior art. As an example, WO 2015/169338 A discloses a surveying system adapted to determine positions of a position measuring resource being mounted on a surveying pole, particularly a Global Navigation Satellite System, GNSS, antenna or a retroreflector.

However, the individuals working with surveying, such as the surveyor, the engineer or the machine operator, would benefit from technology which provides them with richer, more complete and up-to-date information for use in carrying out the surveying. For example, it would be desirable to have survey-related equipment, which provides an operator with augmented vision capabilities while at a job site, thereby providing the operator with information and other visual cues that are not normally visible or available.

One particular problem with prior art is the accurate placement of a surveying tool, such as a rover rod, at e.g. a certain spatial point or line. Such placement may be inaccurate and/or time-consuming.

Furthermore, there may be a need for additional data, which assists a user in performing the technical tasks of e.g. measuring, marking, digging etc.

Such data may enable the user to perform the technical tasks more efficiently, more accurately and/or faster.

Thus, another problem with prior art is how to provide a fast and/or accurate procedure for placing a surveying tool, such as a rover rod, taking measurements, marking out lines/points and/or digging during surveying.

### SUMMARY

It is an object of some embodiments to solve, mitigate, alleviate or eliminate at least some of the above or other problems or disadvantages.

According to a first aspect, this is achieved by a computer-implemented method of a mobile device for facilitating placement of a surveying tool, such as a rover rod. The method comprises capturing, by a camera, at least one image of surroundings. The camera is preferably a camera of the mobile device. Furthermore, the method comprises generating, by the mobile device, a representation of the surroundings, based on the at least one captured image. Moreover, the method comprises creating, by the mobile device, a model of the surveying tool. Thereby a virtual surveying tool is produced. The method comprises receiving, by the mobile device, a model of survey-related data. The survey-related data identifies a placement area/point for the surveying tool. Furthermore, the method comprises calculating, by the mobile device, respective mappings of the model of the surveying tool and of the model of survey-related data to the representation of the surroundings, based on sensor data from an electronic receiver. Thereby the models are aligned with the representation. The electronic receiver is preferably an electronic receiver other than an electronic receiver of the mobile device. Furthermore, the calculating respective mappings of the model of the surveying tool and of the model of survey-related data to the representation of the surroundings may additionally be based on sensor data from an inertial measurement unit, IMU. The IMU is preferably an IMU of the mobile device. The sensor data is associated with the at least one image of the surroundings. Moreover, the method comprises augmenting, by the mobile device, the representation of the surroundings by superimposing the mappings onto the representation of the surroundings. Thereby at least one augmented representation is produced. The method comprises displaying, by a display device, the at least one augmented representation. The display device is preferably a display of the mobile device.

In some embodiments, generating, by the mobile device, a representation of the surroundings comprises creating a first region of an extended view, based on a latest captured image, if a latest captured image is available. If no captured image, and therefore no latest image, is available, the first region is based on a virtual image. The first region may be a centre region of the extended view. The generating comprises creating a second region of the extended view. The creating is based on a captured image other than the latest captured image if a captured image other than the latest captured image is available. If a captured image other than the latest captured image is not available, the creating is based on a virtual image. The second region of the extended view may be a peripheral region of the extended view. Furthermore, the generating comprises utilizing the extended view as the representation.

In some embodiments, the mappings of the model of the surveying tool and of the model are projections of the model of the surveying tool and of the model of survey-related data onto the representation of the surroundings.

In some embodiments, the computer-implemented method comprises recognising, by the mobile device, the surveying tool from the at least one image. The method then comprises displaying, on the display device, a repeated animation of the virtual surveying tool being moved from a position of the recognized surveying tool to a position of the placement area/point until the surveying tool is placed at the placement area/point.

In some embodiments, all steps of the method are performed in real-time. All steps of the method are repeated until a user input for pausing or stopping the method is detected. Thereby an augmented live view may be presented on the display device.

In some embodiments, the identified placement area/point is represented by a circle or a bullseye, having a radius specifying an allowable distance from the centre of the circle or bullseye at which the surveying tool may be placed.

In some embodiments, the augmenting further comprises transforming the at least one augmented representation. The transforming preferably utilizing a virtual camera system. Through the transforming the viewpoint may be changed from the position of the camera to a (another) viewpoint. The (another) viewpoint is selectable to be at a position of a user's eyes. Furthermore the (another) viewpoint is selectable to be at a position anywhere from about the position of the user's eyes to about 3 meters, m, behind the user and/or to a position, which is from 0.5 m to 4 m over the ground. Preferably, the (another) viewpoint is selectable to be at a position, which is from 25 centimetres, cm, behind the user's eyes to 75 cm behind the user's eyes and from 1.5 m to 2.5 m over the ground.

In some embodiments, the model of the surveying tool is a three dimensional, 3D, model. The 3D model is created, based on an estimation of a diameter and/or a length of the surveying tool from a lockup table with known diameters and/or lengths of surveying tools.

According to a second aspect, the object is achieved by a computer program product comprising a non-transitory computer readable medium. The non-transitory computer readable medium has thereon a computer program comprising program instructions. The computer program is loadable into a data processing unit. The computer program is configured to cause execution of the method according to the first aspect when the computer program is run by the data processing unit.

According to a third aspect, the object is achieved by an apparatus for facilitating placement of a surveying tool. The surveying tool may be a rover rod. The apparatus comprises controlling circuitry. The controlling circuitry may be for a mobile device. The controlling circuitry is configured to cause capture, by a camera, preferable a camera of the mobile device, of at least one image of surroundings. Furthermore, the controlling circuitry is configured to cause generation, by the mobile device, of a representation of the surroundings, based on the at least one captured image. Moreover, the controlling circuitry is configured to cause creation, by the mobile device, of a model of the surveying tool. Thereby a virtual surveying tool is produced. The controlling circuitry is configured to cause reception, by the mobile device, of a model of survey-related data, the survey-related data identifying a placement area/point for the surveying tool. Furthermore, the controlling circuitry is configured to cause calculation, by the mobile device , of respective mappings of the model of the surveying tool and of the model of survey-related data to the representation of the surroundings, based on sensor data from an electronic receiver, the sensor data being associated with the at least one image of the surroundings. Thereby the models are aligned with the representation. Preferably, the electronic receiver is an electronic receiver other than an electronic receiver of the mobile device. The calculation of the respective mappings may additionally be based on sensor data from an inertial measurement unit, IMU. The IMU is preferably an IMU of the mobile device. Moreover, the controlling circuitry is configured to cause augmentation, by the mobile device, of the representation of the surroundings by superimposing the mappings onto the representation of the surroundings. Thereby at least one augmented representation is produced. The controlling circuitry is configured to cause display, by a display device, of the at least one augmented representation. The display device is preferably a display of the mobile device.

In some embodiments, any of the above aspects may additionally have features identical with or corresponding to any of the various features as explained above for any of the other aspects.

An advantage of some of the embodiments is that a richer, more complete and up-to-date information for use in carrying out the surveying is presented to the user.

Another advantage of some of the embodiments is the provision to an operator of augmented vision capabilities while at a job site, thereby providing the operator with information and other visual cues that are not normally visible or available.

Yet another advantage of some of the embodiments is the accurate applying of virtual measuring lines, measuring points or other virtual models superimposed on top of images captured by a camera or on top of virtual images.

A further advantage of some of the embodiments is accurate placement of a surveying tool, for instance at a certain spatial point or line.

Yet a further advantage of some of the embodiments is the provision of accurate additional data in the form of augmented reality images, which assists a user in performing technical tasks, such as measuring, marking, and/or digging.

Another advantage of some of the embodiments are that the user is enabled to perform the technical tasks more efficiently, more accurately and/or faster. Yet another advantage is that a faster and/or more accurate procedure for measuring, marking out lines/points and/or digging during surveying may be provided. A further advantage is that the operator is provided with augmentation information even when there is no real image of the surroundings. Yet a further advantage of some of the embodiments is that an operator may be guided as to where to place the surveying tool and/or that a more user-friendly and intuitive overview of how to perform the tasks is presented to the user. Another advantage is the provision of a faster and/or more accurate procedure for placing the rover rod. Yet another advantage is the provision of additional data in the form of augmented reality images, which assists a user in performing the technical task of for instance correctly and accurately placing the surveying tool. The data further enables the user to perform the technical tasks more efficiently, more accurate and/or faster.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a schematic drawing illustrating an example of a surveying tool;
Figure 2 is a schematic drawing illustrating an example of a rover rod;
Figure 3 is a schematic block diagram illustrating an example mobile device and some of its components;
Figure 4 is a flowchart illustrating example method steps;
Figure 5 is a flowchart illustrating example method steps implemented in an apparatus for a mobile device;
Figure 6A is a schematic drawing illustrating an example image of surroundings of a camera;
Figure 6B is a schematic drawing illustrating an example of a representation of surroundings of a camera;
Figure 7 is a schematic drawing illustrating an example of a model of a surveying tool;
Figure 8 is a schematic drawing illustrating an example of a model of survey-related data;
Figure 9 is a schematic drawing illustrating example mappings of a model of survey-related data and a model of the surveying tool to the representation of surroundings of a camera;
Figure 10 is a schematic drawing illustrating an example of an augmented representation;
Figure 11 is a schematic drawing illustrating an example of an extended view;
Figure 12 is a schematic drawing illustrating another example of an extended view;
Figure 13 is a flowchart illustrating an example of some steps performed for generating a representation of the surroundings;
Figure 14 is a schematic drawing illustrating an example computer readable medium; and
Figure 15 is a schematic drawing illustrating an example tablet computer.

### DETAILED DESCRIPTION

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

Embodiments of the present disclosure will be described and exemplified more fully hereinafter with reference to the accompanying drawings. The solutions disclosed herein can, however, be realized in many different forms and should not be construed as being limited to the embodiments set forth herein.

Below reference is made to an electronic receiver. Examples of electronic receivers may be electronic position receivers or electronic receivers for positioning. Some examples of electronic receivers for positioning are a prism, such as a round prism or a 360-degree prism, a retroreflector, and a receiver for a satellite navigation system, such as a Global Navigation Satellite System, GNSS, receiver. Some examples of GNSS receivers are a Global Positioning System, GPS, receiver, a Global Navigation Satellite System, GLONASS, receiver and a BeiDou Navigation Satellite System, BDS, receiver. The described electronic receiver may be any of these types of electronic receivers.

Furthermore, below reference is made to an inertial measurement unit, IMU. Some examples of an IMU are an accelerometer, a gyroscope and a magnetometer. The described IMU may be any suitable IMU, for example any of these types of IMU's.

Moreover, below reference is made to a position of the user's eyes. Examples of such a position are at the position of the user's eyes, when the user is looking at a display; at the position 0.2-2 m from the display, when the user is looking at a display; at a position 0.5-1m from the display, when the user is looking at a display; and at a position about 0.70 m from the display, when the user is looking at a display.

In addition, below reference is made to surroundings. The surroundings may refer to the surroundings of a camera. However, the surroundings may also refer to the surroundings of a surveying tool or a rover rod, when the camera is attached to the surveying tool or the rover rod. Moreover, the surroundings may refer to surrounding of a mobile device, which comprises the camera.

Some of the components described below are attachable to or detachable from a surveying tool. The attachment of the components may be realized by any suitable attachment device, such as a fastener, a support, an adapter, a clamp, a connector, a coupling or similar.

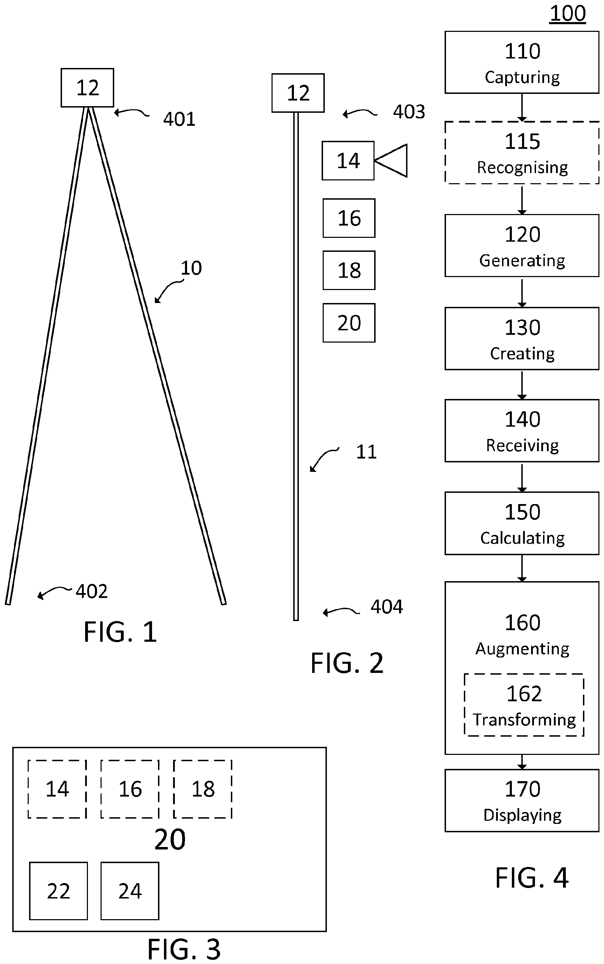

Figure 1 is a schematic drawing illustrating an example surveying tool 10. The surveying tool may be a tripod, a total station, a rover rod, or any other suitable surveying tool. The surveying tool 10 has a first end 401 and a second end 402. At the first end 401, an electronic receiver 12 may be attached. The second end 402 is the bottom end and this end may be at ground level, when the surveying tool 10 is used. Although not shown in figure 1, the surveying tool 10 may have attached thereon anyone or more of a detachable electronic receiver 12 (shown in figure 2), a detachable camera 14 (shown in figure 2), a detachable inertial measurement unit, IMU 16, a detachable displaying device 18 (shown in figure 2) and a detachable mobile device 20 (shown in figure 2). The detachable electronic receiver 12, when attached to the surveying tool, may by attached at the top, or sit on top, of the surveying tool 10.

Figure 2 is a schematic drawing illustrating an example rover rod 11. The rover rod 11 has a first end 403 and a second end 404. At the first end 403, an electronic receiver 12 may be attached. The second end 404 is the bottom end and this end may be at ground level, when the surveying tool is in use. The rover rod 11 may have attached thereon anyone or more of a detachable electronic receiver 12, a detachable camera 14, a detachable IMU 16, a detachable displaying device 18 and a detachable mobile device 20. The detachable electronic receiver 12, when attached to the rover rod, may by attached at the top, or sit on top, of the rover rod 11. However, any one or more of the detachable electronic receiver 12, the detachable camera 14, the detachable IMU 16, the detachable displaying device 18 and the detachable mobile device 20 may be detached from the rover rod 11. Furthermore, the electronic receiver 12 may, instead of being attached or attachable to the rover rod 11, be detachably attached or attachable to the mobile device 20.

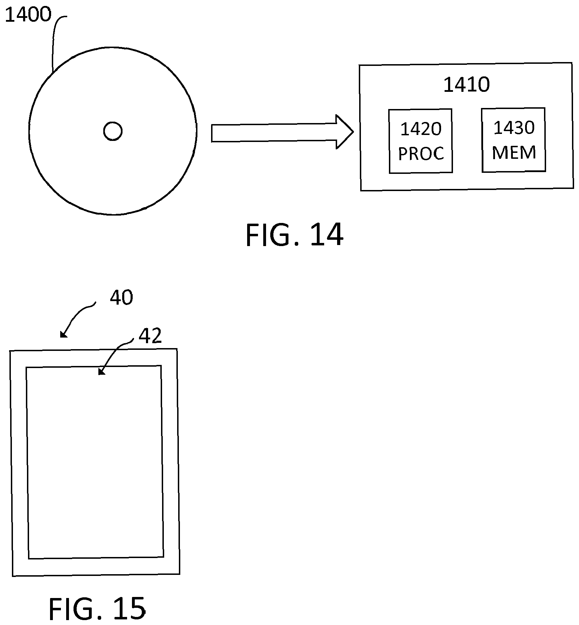

Figure 3 is a schematic block diagram illustrating an example mobile device 20 and some of its components. The mobile device comprises a processor 22 and a data storage unit 24. Furthermore, the mobile device 20 may comprise or be a tablet computer 40 (shown in figure 15), a mobile phone, a smartphone, a laptop computer, or any other suitable mobile computing device. Moreover, the mobile device 20 may comprise the camera 14, the IMU 16 and the display 18.

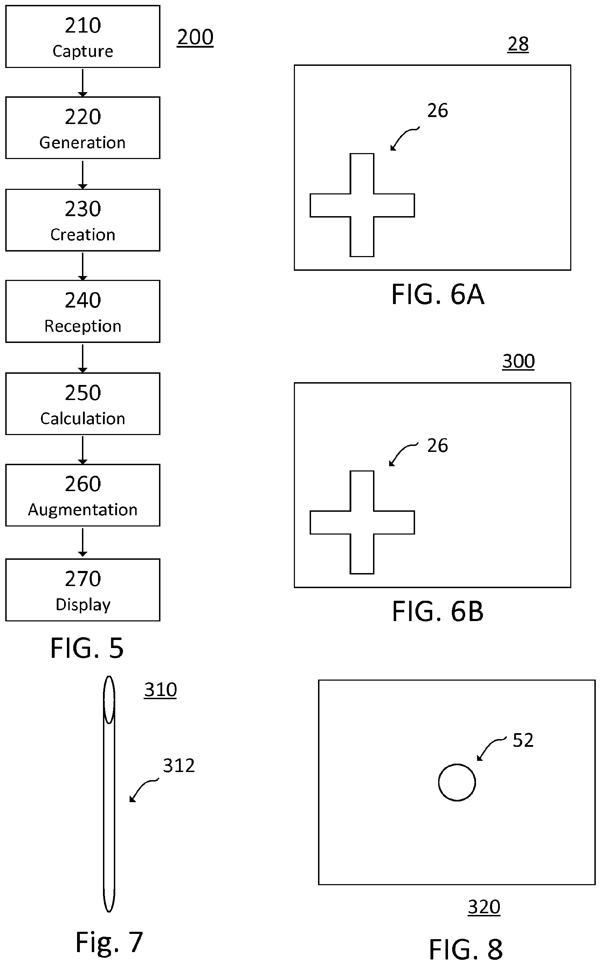

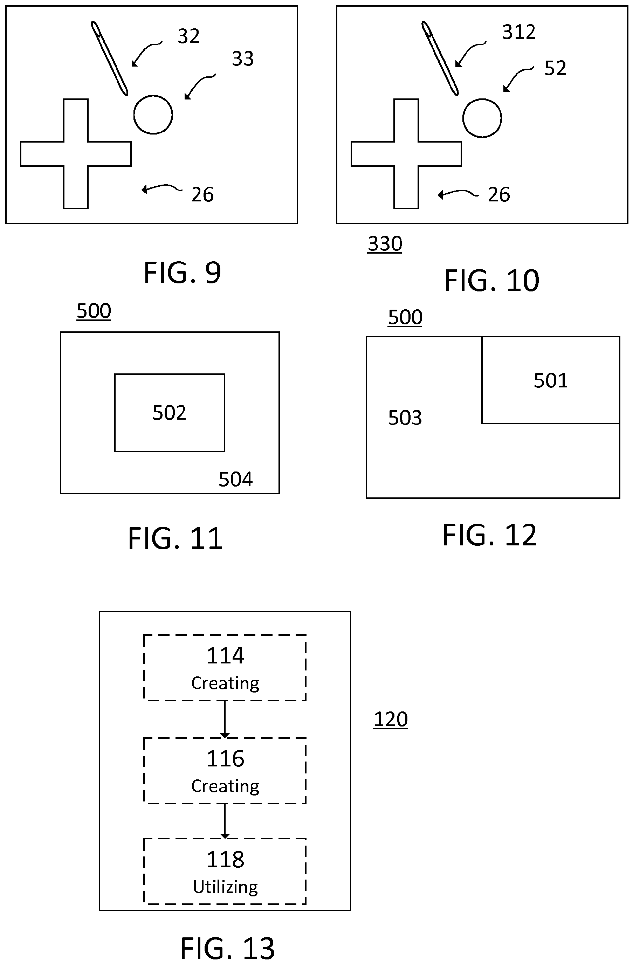

Figure 4 is a flowchart illustrating example method steps for a computer-implemented method 100 of a mobile device 20 for facilitating placement of a surveying tool 10, such as a rover rod 11. The method 100 comprises capturing 110, by a camera 14, at least one image 28 (shown in figure 6A) of surroundings, such as surroundings of the camera, surroundings of the mobile device or surroundings of the surveying tool. The camera 14 is preferable a camera of the mobile device 20. In some embodiments a plurality of images of the surroundings are captured. As an operator or a surveyor may move around with the mobile device 20 detached from the surveying tool 10 and/or the camera 14 detached from the surveying tool 10 or as the surveying tool 10, with the mobile device 20 and/or the camera 14 attached thereto, may be moved around, the plurality of images may be captured from different positions and with the camera 14 and/or the mobile device 20 in different positions and/or orientations. Furthermore, the method 100 comprises generating 120, by the mobile device 20, a representation 300 (shown in figure 6B) of the surroundings, based on the at least one captured image 28. As an example, a captured image may be directly utilized as a representation 300. As another example, a plurality of images may have been captured. Then a three dimensional, 3D, model may be created from one or more of the captured images. The 3D model may then be utilized as a representation 300. Moreover, the method 100 comprises creating 130, by the mobile device 20, a model 310 (shown in figure 7) of the surveying tool 10. Thereby a virtual surveying tool 312 (shown in figure 7) is produced. The model 310 of the surveying tool 10 is preferably a three dimensional, 3D, model. As another example, the model 310 is a two-dimensional model. The model 310 may be created, based on an estimation of a diameter and/or a length of the surveying tool 10 from a lockup table with known diameters and/or lengths of surveying tools. Alternatively or additionally, the model 310 may be based on recognizing 115, by the mobile device 20, the surveying tool 10 from the at least one image 28. A model 310 can then be built from the object, i.e. the surveying tool, recognized, by estimating the length and diameter either from the size of the object, e.g. from photogrammetry, from the lockup table or a combination thereof. The method 100 comprises receiving 140, by the mobile device 20, a model 320 (shown in figure 8) of survey-related data, the survey-related data identifying a placement area/point 52 (shown in figure 8) for the surveying tool 10. The model 320 of survey-related data may comprise a model of a set of measurement points, a model of measurement lines, a model of a measurement polyline or a model of any combination of measurement points, measurement lines, and measurement polylines. Further examples of survey-related data are a house, a building, a garage, a wall, a pipe, a shaft, a circle, a bullseye, a square and a rectangle. The survey-related data may, for example, be received by the mobile device 20 from a USB memory stick, from a local database, from a remote database, from a remote network, from the Internet, via an Ethernet connection, via a Wi-Fi connection, via a Bluetooth connection or via a mobile data connection or from any other suitable source. In an embodiment, the survey-related data is defined in real world/global coordinates. Furthermore, the method 100 comprises calculating 150 respective (e.g. first and second) mappings 32, 33 (shown in figure 9) of the model 310 of the surveying tool 10 and of the model 320 of survey-related data to the representation 300 of the surroundings, based on sensor data from an electronic receiver 12. Thereby the models 310, 320 are aligned with each other and with the representation 300. In one embodiment, the first mapping 32 is based on the position of the placement area/point 52 and the second mapping 33 is based on sensor data from an electronic receiver 12. In an embodiment, the sensor data is defined in real world/global coordinates. The electronic receiver 12 is preferably an electronic receiver other than an electronic receiver of the mobile device 20. Furthermore, the calculating 150 respective mappings 32, 33 of the model 310 of the surveying tool 10 and of the model 320 of survey-related data to the representation 300 of the surroundings may additionally be based on sensor data from an inertial measurement unit, IMU 16. The IMU 16 is preferably an IMU of the mobile device.

As an example, the position in 3D and the orientation in 3D of the representation are known from the sensor data. Step 150 may then comprise choosing to view the models 310, 320 from the same viewpoint as a viewpoint of the representation 300, for example by selecting the same position and the same orientation for the models 310, 320 as for the representation 300. Thereby the models 310, 320 are aligned with each other and with the representation 300. As another example, although, the position in 3D and the orientation in 3D for the representation 300 are known, a different viewpoint, such as a virtual camera viewpoint, may be selected for both of the models 310, 320 and the representation 300. Thereby the models 310, 320 are aligned with each other and with the representation 300. Such a different viewpoint may enable the presentation of a more intuitive picture of how to perform tasks, such as placement of a surveying tool 10 at a specific point, line, circle, rectangle or square. The calculating 150 may be performed by the mobile device 20 or by the processor 22.

Moreover, the method 100 comprises augmenting 160 the representation 300 of the surroundings by superimposing the mappings 32, 33 onto the representation 300 of the surroundings. Thereby at least one augmented representation 330 (shown in figure 10) is produced. The augmenting 160 is preferably carried out by the mobile device 20.

In one embodiment the augmenting 160 further comprises transforming 162 the at least one augmented representation 330. The transforming 162 may be changing the viewpoint from the position of the camera to another viewpoint. The transforming 162 preferably utilizing a virtual camera system to change the viewpoint. The augmented representation 330 may be formed such that when displayed on a display it appears to be viewed from a viewpoint, which coincides with the position of the camera. However, this viewpoint may be changed through transforming 162 utilizing a virtual camera system. The augmented representation 330 can then be transformed and a new viewpoint can be selected. More specifically a new viewpoint can be selected as for example a position of a user's eyes or as another example at a position anywhere from about the position of the user's eyes to about 3 meters, m, behind the user and/or to a position, which is from 0.5 m to 4 m over the ground. Preferably, the viewpoint should be selected to be at a position, which is from 25 centimeters, cm, behind the user's eyes to 75 cm behind the user's eyes and from 1.5 m to 2.5 m over the ground. Furthermore, the viewpoint may alternatively be selected to be at a position, which is from 1.5 m behind the user's eyes to 2 m behind the user's eyes and from 0.5 m to 1.5 m over the ground, such as 1.7 m behind the user's eyes and 1 m over the ground.

The method 100 comprises displaying 170, by a display device 18, the at least one augmented representation 330. The display device 18 is preferably a display of the mobile device 20.

In some embodiments, the method further comprises recognising 115, by the mobile device 20, the surveying tool 10 from the at least one image 28. The position and orientation of the recognized surveying tool 10 will then be stored. Then a repeated animation of the virtual surveying tool 312 being moved from a position of the recognized surveying tool 10 to a position of the placement area/point 52 may be displayed, on the display device (18), until the surveying tool 10 is placed at the placement area/point 52.

Figure 5 is a flowchart illustrating example method steps implemented in an apparatus for facilitating placement of a surveying tool 10. The surveying tool may be a rover rod 11. The apparatus comprises controlling circuitry. The controlling circuitry may be one or more processors, such as the processor 22.

The controlling circuitry is configured to cause capture, by a camera 14 of at least one image 28 of surroundings. The camera 14 is preferable a camera of the mobile device 20. Furthermore, the controlling circuitry is configured to cause generation 220 of a representation 300 of the surroundings, based on the at least one captured image 28. To this end, the controlling circuitry may be associated with (e.g. operatively connectable, or connected, to) a generator (e.g. generation circuitry or a generation module) configured to generate a representation 300 of the surroundings, based on the at least one captured image 28. The generation 220 is preferably carried out by the mobile device 20. Moreover, the controlling circuitry is configured to cause creation 230 of a model 310 of the surveying tool 10. To this end, the controlling circuitry may be associated with (e.g. operatively connectable, or connected, to) a creation unit (e.g. creation circuitry or a creation module) configured to create a model 310 of the surveying tool 10. Thereby a virtual surveying tool 312 is produced. The creation 230 is preferably carried out by the mobile device 20. The controlling circuitry is configured to cause reception 240 of a model 320 of survey-related data, the survey-related data identifying a placement area/point 52 for the surveying tool 10. To this end, the controlling circuitry may be associated with (e.g. operatively connectable, or connected, to) a reception unit (e.g. reception circuitry or a reception module) configured to cause reception 240 of a model 320 of survey-related data, the survey-related data identifying a placement area/point 52 for the surveying tool 10. The reception 240 is preferably carried out by the mobile device 20. Furthermore, the controlling circuitry is configured to cause calculation 250 of respective mappings 32, 33 of the model 310 of the surveying tool 10 and of the model 320 of survey-related data to the representation 300 of the surroundings, based on sensor data from an electronic receiver 12. To this end, the controlling circuitry may be associated with (e.g. operatively connectable, or connected, to) a calculation unit (e.g. calculation circuitry or a calculation module) configured to cause calculation 250 of respective mappings 32, 33 of the model 310 of the surveying tool 10 and of the model 320 of survey-related data to the representation 300 of the surroundings, based on sensor data from an electronic receiver 12. The sensor data is associated with the at least one image 28 of the surroundings. Furthermore, the sensor data may also be associated with the representation 300, as the representation 300 is derived from at least one image 28. The mappings 32, 33 may be for aligning the models 310, 320 with each other and with the representation 300. Preferably, the electronic receiver 12 is an electronic receiver other than an electronic receiver of the mobile device 20. The calculation 250 of the respective mappings 32, 33 may additionally be based on sensor data from an inertial measurement unit, IMU 16. The IMU 16 is preferably an IMU of the mobile device 20. Moreover, the controlling circuitry is configured to cause augmentation 260 of the representation 300 of the surroundings by superimposing the mappings 32, 33 onto the representation 300 of the surroundings. To this end, the controlling circuitry may be associated with (e.g. operatively connectable, or connected, to) an augmentation unit (e.g. augmentation circuitry or an augmentation module) configured to cause augmentation 260 of the representation 300 of the surroundings by superimposing the mappings 32, 33 onto the representation 300 of the surroundings. Thereby at least one augmented representation 330 is produced. The augmentation 260 is preferably carried out by the mobile device 20. The controlling circuitry is configured to cause display 270, by a display device 18, of the at least one augmented representation 230. To this end, the controlling circuitry may be associated with (e.g. operatively connectable, or connected, to) a display unit (e.g. display circuitry or a display module) configured to cause display 270, by a display device 18, of the at least one augmented representation 230. The display device is preferably a display of the mobile device 20.

Figure 6A is a schematic drawing illustrating an example image 28 of a surrounding of a camera. The image 28 may be captured by the camera 14. The image 28 may contain one or more objects 26.

Figure 6B is a schematic drawing illustrating an example representation 300 of surroundings of a camera. The representation 300 of the surroundings may be a 2D representation or a 3D representation. As an example, a captured image 28 may be directly utilized as a representation 300.

As another example, an extended view 500 (shown in figures 11-12) may be utilized as a representation 300. As yet another example, a three dimensional, 3D, model may be created from one or more captured images 28. As an example, photogrammetry may be utilized for creating the 3D model from one or more captured images 28. Photogrammetry may comprise inner orientation, relative orientation and exterior orientation. Inner orientation defines geometric parameters of the imaging process through calibration of the camera. Relative orientation orients the captured images so that common points coincides. Exterior orientation defines the camera's position or location in space and its view direction or viewpoint, i.e. the camera's position and orientation are defined in real world coordinates. The 3D model may then be utilized as a representation 300.

Figure 7 is a schematic drawing illustrating an example of a model 310 of a surveying tool 10. The surveying tool 10 has a diameter and a length and this is reflected in the model. The model may be two-dimensional or three-dimensional.

Figure 8 is a schematic drawing illustrating an example model 320 of survey-related data. As an example, the model 320 may be a two-dimensional model. As another example, the model 30 may be a three-dimensional model. The model 320 of survey-related data comprises a placement area/point 52 for the surveying tool 10. As an example, the placement area 52 is a circle or a bullseye, having a radius specifying an allowable distance from the center of the circle or bullseye at which the surveying tool 10 may be placed. The allowable distance from the center may be based on, or correspond to, an error margin. As another example, the placement area 52 is a square or a rectangle.

Figure 9 is a schematic drawing illustrating example mappings 32, 33 of the model 320 of survey-related data and the model 310 of the surveying tool 10 to the representation 300. As an example, the mappings 32, 33 are spatial transformations from one set of coordinates for position and one set of coordinates for orientation to another set of coordinates for position and another set of coordinates for orientation with the purpose of aligning the models 310, 320 with each other and with the representation 300. The set of coordinates may comprise two or three coordinates. As another example, the mappings 32, 33 are projections of the model 310 of the surveying tool 10 and of the model 320 of the survey-related data to a representation 300 of the surroundings. The models 310, 320 may be three-dimensional models and the representation 300 may be two-dimensional. As the position and orientation of the representation 300 may be derived from the positions and orientations of captured images, which positions and orientations are known from sensor data, projections, seen from the same viewpoint as the representation 300, of the models 310, 320 can be calculated.

Figure 10 is a schematic drawing illustrating an example of an augmented representation 330. The augmented representation 330 may comprise one or more objects 26 from an image 28 of the surroundings. Furthermore, the augmented representation 330 may comprise survey-related data from a model 320 of survey-related data, such as a placement area/point 52 for the surveying tool 10. Moreover, the augmented representation 330 may comprise a virtual surveying tool 312.

Figure 11 is a schematic drawing illustrating an example of an extended view 500. The extended view 500 may comprise a center region 502 and a peripheral region 504. Alternatively, the extended view may comprise a center region 502 and a plurality of peripheral regions 504 (not shown).

Figure 12 is a schematic drawing illustrating another example of an extended view 500. In this example, the extended view 500 comprises a first region 501 and a second region 503. Additionally, the extended view 500 may comprise a third region (not shown).

Figure 13 is a schematic block diagram illustrating an example of some steps performed for generating 120 a representation 300 of the surroundings. In the example, the generating 120 comprises creating 114 a first region 501, such as a center region 502 of an extended view 500. This creating 114 a first region 501 may be based on a latest captured image, if a latest captured image is available. If no captured image 28 is available, and therefore no latest image is available or alternatively if no suitable image is available, the creating 114 may instead be based on a virtual image. A virtual image may be created, based on any knowledge of the surroundings, such as that the surroundings comprise asphalt or grass and/or that the image comprises ground and a sky. For instance, if it is known that the survey is taking place on a flat field, it may be assumed that the virtual image can be created by making an upper portion of the virtual image resemble a sky and by making a lower portion of the virtual image resemble grass. Furthermore, the generating 120 may further comprise creating 116 a second region 503, such as a peripheral region 504 of the extended view 500. The creating 116 a second region is based on a captured image other than the latest captured image if a captured image other than the latest captured image is available. Alternatively, the creating 116 a second region is based on a plurality of captured images other than the latest captured image if a plurality of captured images other than the latest captured image are available. However, if no captured image other than the latest captured image is available or if no other suitable images, other than the latest image, are available, the creating 116 a second region may be based on a virtual image in a similar manner as for the first region. Furthermore, some regions of the extended view may not be satisfactory created from captured images. In that case, these regions may be created based on one or more virtual images. Thus, the extended view may extend the displayed field of view to regions of interest that are not part of the latest captured image. Thereby regions of interest may be displayed although they are not part of the latest captured image. Moreover, the generating 120 may further comprise utilizing 118 the extended view 500 as the representation 300.

Figure 14 is a schematic drawing illustrating an example computer readable medium in the form of a compact disc (CD) ROM 1400. The computer readable medium has stored thereon a computer program comprising program instructions. The computer program is loadable into a data processing unit (PROC) 1420, which may be a processor 22 or another processing unit comprised in a mobile device 20. When loaded into the data processing unit, the computer program may be stored in a memory (MEM) 1430 associated with or comprised in the data-processing unit. The memory may be data storage unit 24. According to some embodiments, the computer program may, when loaded into and run by the data processing unit, cause execution of method steps according to, for example, any of the methods illustrated in Figures 4-5 or otherwise described herein.

Figure 15 is a schematic drawing illustrating an example tablet computer or tablet 40 with a display 42. The tablet 40 may further comprise components, such as a camera, and/or an IMU.

Furthermore, in an embodiment, all steps of the method are performed in real-time. Moreover, all steps of the method may be repeated until a user input for pausing or stopping the method is detected. Thus, an augmented live view may be presented on the display device 18. The input for pausing or stopping the method may be detected in response to a user pressing a button of the mobile device 20 to pause or stop the method. The button may be a physical button or the like. Alternatively, the input for pausing or stopping the method may be detected in response to a user touching a specific area of a touch screen of the mobile device 20. As this specific area of the touch screen is touched, the method may be stopped or paused. Likewise, another specific area of the touchscreen may be configured to act as a start button for the method. Alternatively, a physical button may be configured to act as a start button for the method.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

### List of examples:

**1.** A computer-implemented method of a mobile device (20) for facilitating placement of a surveying tool (10), such as a rover rod (11), the method comprising:
   capturing (110), by a camera (14), preferably a camera of the mobile device (20), at least one image (28) of surroundings;
   generating (120), by the mobile device (20), a representation (300) of the surroundings, based on the at least one captured image (28);
   creating (130), by the mobile device (20), a model (310) of the surveying tool (10), thereby producing a virtual surveying tool (312);
   receiving (140), by the mobile device (20), a model (320) of survey-related data, the survey-related data identifying a placement area/point (52) for the surveying tool (10);
   calculating (150), by the mobile device (20), respective mappings (32, 33) of the model (310) of the surveying tool (10) and of the model (320) of survey-related data to the representation (300) of the surroundings, based on sensor data from an electronic receiver (12), preferably an electronic receiver other than an electronic receiver of the mobile device (20), and optionally based on sensor data from an inertial measurement unit, IMU, (16), preferably an IMU of the mobile device (20), the sensor data being associated with the at least one image (28) of the surroundings, thereby aligning the models (310, 320) with the representation (300);
   augmenting (160), by the mobile device (20), the representation (300) of the surroundings by superimposing the mappings (32, 33) onto the representation (300) of the surroundings, thereby producing at least one augmented representation (330);
   displaying (170), by a display device (18), preferably a display of the mobile device (20), the at least one augmented representation (330).
**2.** The method of example 1, wherein generating (120), by the mobile device (20), a representation (300) of the surroundings comprises:
   creating (114) a first region (501), such as a centre region (502) of an extended view (500), based on a latest captured image, if a latest captured image is available, or based on a virtual image, if no latest captured image (28) is available;
   creating (116) a second region (503), such as a peripheral region (504) of the extended view (500), based on a captured image other than the latest captured image if a captured image other than the latest captured image is available or based on a virtual image, if no captured image other than the latest captured image is available; and
   utilizing (118) the extended view (500) as the representation (300).
**3.** The method of any of the preceding examples, wherein the mappings (32, 33) of the model (310) of the surveying tool (10) and of the model (320) are projections of the model (310) of the surveying tool (10) and of the model (320) of survey-related data to the representation (300) of the surroundings.
**4.** The method of any of the preceding examples, further comprising:
   recognising (115), by the mobile device (20), the surveying tool (10) from the at least one image (28); and
   displaying, on the display device (18), a repeated animation of the virtual surveying tool (312) being moved from a position of the recognized surveying tool (10) to a position of the placement area/point (52) until the surveying tool (10) is placed at the placement area/point (52).
**5.** The method of any of the preceding examples, wherein all steps of the method are performed in real-time and wherein all steps of the method are repeated until a user input for pausing or stopping the method is detected, so that an augmented live view is presented on the display device (18).
**6.** The method of any of the preceding examples, wherein the identified placement area/point (52) is represented as a circle or a bullseye, having a radius specifying an allowable distance from the centre of the circle or bullseye at which the surveying tool (10) may be placed.
**7.** The method of any of the preceding examples, wherein the augmenting (160) further comprises: transforming (162) the at least one augmented representation (330), preferably utilizing a virtual camera system, by changing the viewpoint from the position of the camera to a viewpoint, which viewpoint is selectable to be at a position of a user's eyes or at a position anywhere from about the position of the user's eyes to about 3 meters, m, behind the user and/or to a position, which is from 0.5 m to 4 m over the ground, and preferably at a position, which is from 25 centimetres, cm, behind the user's eyes to 75 cm behind the user's eyes and from 1.5 m to 2.5 m over the ground.
**8.** The method of any of the preceding examples, wherein the model (310) of the surveying tool (10) is a three dimensional, 3D, model and is created, based on an estimation of a diameter and/or a length of the surveying tool (10) from a lockup table with known diameters and/or lengths of surveying tools.
**9.** A computer program product comprising a non-transitory computer readable medium (1400), having thereon a computer program comprising program instructions, the computer program being loadable into a data processing unit (1420) and configured to cause execution of the method according to any of examples 1 to 8 when the computer program is run by the data processing unit (1420).
**10.** An apparatus for facilitating placement of a surveying tool (10), such as a rover rod (11), the apparatus comprising controlling circuitry for a mobile device (20), the controlling circuitry configured to cause:
   capture (210), by a camera (14), preferable a camera of the mobile device (20), of at least one image (28) of surroundings;
   generation (220), by the mobile device (20), of a representation (300) of the surroundings, based on the at least one captured image (28);
   creation (230), by the mobile device (20), of a model (310) of the surveying tool (10), thereby producing a virtual surveying tool (312);
   reception (240), by the mobile device (20), of a model (320) of survey-related data, the survey-related data identifying a placement area/point (52) for the surveying tool (10);
   calculation (250), by the mobile device (20), of respective mappings (32, 33) of the model (310) of the surveying tool (10) and of the model (320) of survey-related data to the representation (300) of the surroundings, based on sensor data from an electronic receiver (12), preferably an electronic receiver other than an electronic receiver of the mobile device (20), and optionally based on sensor data from an inertial measurement unit, IMU, (16), preferably an IMU of the mobile device (20), the sensor data being associated with the at least one image (28) of the surroundings, thereby aligning the models (310, 320) with the representation (300);
   augmentation (260), by the mobile device (20), of the representation (300) of the surroundings by superimposing the mappings (32, 33) onto the representation (300) of the surroundings, thereby producing at least one augmented representation (330); and
   display (270), by a display device (18), preferably a display of the mobile device (20), of the at least one augmented representation (330).

## Claims

1. A computer-implemented method of a mobile device (20) for facilitating placement of a surveying tool (10), such as a rover rod (11), the method comprising:
capturing (110), by a camera (14), preferably a camera of the mobile device (20), at least one image (28) of surroundings;
generating (120), by the mobile device (20), a representation (300) of the surroundings, based on the at least one captured image (28);
creating (130), by the mobile device (20), a model (310) of the surveying tool (10) based on an estimation of a diameter and/or a length of the surveying tool (10) from a lockup table with known diameters and/or lengths of surveying tools, thereby producing a virtual surveying tool (312);
receiving (140), by the mobile device (20), a model (320) of survey-related data, the survey-related data identifying a placement area/point (52) for the surveying tool (10);
calculating (150), by the mobile device (20), respective mappings (32, 33) of the model (310) of the surveying tool (10), based on the position of the placement area/point (52), and of the model (320) of survey-related data to the representation (300) of the surroundings, based on sensor data from an electronic receiver (12) detachably attached to the mobile device (20), and based on sensor data from an inertial measurement unit, IMU, (16), preferably an IMU of the mobile device (20), the sensor data being associated with the at least one image (28) of the surroundings, thereby aligning the models (310, 320) with the representation (300);
augmenting (160), by the mobile device (20), the representation (300) of the surroundings by superimposing the mappings (32, 33) onto the representation (300) of the surroundings, thereby producing at least one augmented representation (330);
displaying (170), by a display device (18), preferably a display of the mobile device (20), the at least one augmented representation (330).

2. The method of claim 1, wherein generating (120), by the mobile device (20), a representation (300) of the surroundings comprises:
creating (114) a first region (501), such as a centre region (502) of an extended view (500), based on a latest captured image, if a latest captured image is available, or based on a virtual image, if no latest captured image (28) is available;
creating (116) a second region (503), such as a peripheral region (504) of the extended view (500), based on a captured image other than the latest captured image if a captured image other than the latest captured image is available or based on a virtual image, if no captured image other than the latest captured image is available; and
utilizing (118) the extended view (500) as the representation (300).

3. The method of any of the preceding claims, wherein the mappings (32, 33) of the model (310) of the surveying tool (10) and of the model (320) are projections of the model (310) of the surveying tool (10) and of the model (320) of survey-related data to the representation (300) of the surroundings.

4. The method of any of the preceding claims, further comprising:
recognising (115), by the mobile device (20), the surveying tool (10) from the at least one image (28); and
displaying, on the display device (18), a repeated animation of the virtual surveying tool (312) being moved from a position of the recognized surveying tool (10) to a position of the placement area/point (52) until the surveying tool (10) is placed at the placement area/point (52).

5. The method of any of the preceding claims, wherein all steps of the method are performed in real-time and wherein all steps of the method are repeated until a user input for pausing or stopping the method is detected, so that an augmented live view is presented on the display device (18).

6. The method of any of the preceding claims, wherein the identified placement area/point (52) is represented as a circle or a bullseye, having a radius specifying an allowable distance from the centre of the circle or bullseye at which the surveying tool (10) may be placed.

7. The method of any of the preceding claims, wherein the augmenting (160) further comprises: transforming (162) the at least one augmented representation (330), preferably utilizing a virtual camera system, by changing the viewpoint from the position of the camera to a viewpoint, which viewpoint is selectable to be at a position of a user's eyes or at a position anywhere from about the position of the user's eyes to about 3 meters, m, behind the user and/or to a position, which is from 0.5 m to 4 m over the ground, and preferably at a position, which is from 25 centimetres, cm, behind the user's eyes to 75 cm behind the user's eyes and from 1.5 m to 2.5 m over the ground.

8. The method of any of the preceding claims, wherein the model (310) of the surveying tool (10) is a three dimensional, 3D, model.

9. A computer program product comprising a non-transitory computer readable medium (1400), having thereon a computer program comprising program instructions, the computer program being loadable into a data processing unit (1420) and configured to cause execution of the method according to any of claims 1 to 8 when the computer program is run by the data processing unit (1420).

10. An apparatus for facilitating placement of a surveying tool (10), such as a rover rod (11), the apparatus comprising controlling circuitry for a mobile device (20), the controlling circuitry configured to cause:
capture (210), by a camera (14), preferable a camera of the mobile device (20), of at least one image (28) of surroundings;
generation (220), by the mobile device (20), of a representation (300) of the surroundings, based on the at least one captured image (28);
creation (230), by the mobile device (20), of a model (310) of the surveying tool (10) based on an estimation of a diameter and/or a length of the surveying tool (10) from a lockup table with known diameters and/or lengths of surveying tools, thereby producing a virtual surveying tool (312);
reception (240), by the mobile device (20), of a model (320) of survey-related data, the survey-related data identifying a placement area/point (52) for the surveying tool (10);
calculation (250), by the mobile device (20), of respective mappings (32, 33) of the model (310) of the surveying tool (10), based on the position of the placement area/point (52), and of the model (320) of survey-related data to the representation (300) of the surroundings, based on sensor data from an electronic receiver (12) detachably attached to the mobile device (20)and based on sensor data from an inertial measurement unit, IMU, (16), preferably an IMU of the mobile device (20), the sensor data being associated with the at least one image (28) of the surroundings, thereby aligning the models (310, 320) with the representation (300);
augmentation (260), by the mobile device (20), of the representation (300) of the surroundings by superimposing the mappings (32, 33) onto the representation (300) of the surroundings, thereby producing at least one augmented representation (330); and
display (270), by a display device (18), preferably a display of the mobile device (20), of the at least one augmented representation (330).
